Europäisches Patentamt

European Patent Office

Office européen des brevets

(19)

(11) Publication number: **0 021 342**
**B1**

(12) **EUROPEAN PATENT SPECIFICATION**

(45) Date of publication of patent specification: **13.04.83**

(21) Application number: **80103402.6**

(22) Date of filing: **18.06.80**

(51) Int. Cl.³: **C 09 K 11/08,**
**C 09 K 11/46,**
**C 09 K 11/475**

(54) Phosphor.

(30) Priority: **19.06.79 JP 77290/79**
**19.06.79 JP 77291/79**

(43) Date of publication of application:
**07.01.81 Bulletin 81/1**

(45) Publication of the grant of the patent:
**13.04.83 Bulletin 83/15**

(84) Designated Contracting States:
**DE FR NL**

(56) References cited:
**FR - A - 2 355 899**
**US - A - 3 951 848**

(73) Proprietor: **KASEI OPTONIX, LTD.**
**2-7-18 Hamamatsu-cho Minato-ku**
**Tokyo (JP)**

(72) Inventor: **Kotera, Noboru**
**1-1-1-905, Naka-cho**
**Odawara-shi Kanagawa-ken (JP)**
Inventor: **Eguchi, Shusaku**
**220-1, Iizumi**
**Odawara-shi Kanagawa-ken (JP)**
Inventor: **Miura, Norio**
**1756-5, Numame**
**Isehara-shi Kanagawa-ken (JP)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P.H. Jakob,**
**Dr. rer. nat. G. Bezold Maximilianstrasse 43**
**D-8000 München 22 (DE)**

# 0 021 342

## Phosphor

This invention relates to a phosphor, and more particularly to a rare earth element activated complex halide phosphor.

Some kinds of phosphors emit fluorescent light when exposed to (excited by) visible light or infrared rays after exposure to ionizing radiations, ultraviolet rays, or cathode rays. This kind of excitation is referred to as "stimulation", and the phosphor which emits fluorescent light upon stimulation is referred to as "stimulable phosphor". It is known that a stimulable phosphor can be used for a radiation image storage panel. That is, a radiation image of an object can be obtained by causing a panel composed of a stimulable phosphor to absorb a radiation passing through the object, exposing the panel to visible light or infrared rays to cause the stimulable phosphor to release the energy of the radiation stored therein as fluorescent light, and then detecting the fluorescent light.

In most cases of practical use of a radiation image storage panel, the object of the image is a human body. Accordingly, particularly when ionizing radiations such as X-rays or $p$-rays are used, it is required for a stimulable phosphor employed in the radiation image storage panel to emit light of as high luminance as possible upon stimulation thereof to decrease a dose of ionizing radiations to which the object is exposed.

As a stimulable phosphor, a rare earth element activated barium fluorohalide phosphor represented by the following formula has been known in the art (see Japanese Patent Laid Open No. 12,145/1980);

$$BaFX:yLn$$

wherein X is chlorine, bromine and/or iodine, Ln is europium, cerium and/or terbium, and Y is a number satisfying the condition of $0 \leq y \leq 0.2$.

Further, it has been known that a rare earth element activated barium fluorohalide phosphor represented by the following formula emits light of high luminance upon stimulation thereof;

$$BaF_2 \cdot aBaX_2 : zLn$$

wherein X and Ln have the same definitions as the above, and a and z are numbers satisfying the conditions of $0.90 \leq a \leq 1.05$ and $0 \leq z \leq 0.4$, respectively. When a and z are $a=1$ and $0 \leq z \leq 0.2$, respectively, the phosphor corresponds to the above-mentioned rare earth element activated barium fluorohalide phosphor described in Japanese Patent Laid Open No. 12,145/1980.

Furthermore, it has been known that a rare earth element activated barium magnesium fluorohalide represented by the following formula emits light of high luminance upon stimulation thereof;

$$BaF_2 \cdot aBaX_2 \cdot bMgF_2 : fLn$$

wherein X and Ln have the same definitions as the above, and a, b and f are numbers satisfying the conditions of $0.90 \leq a \leq 1.05$, $0 < b \leq 1.2$ and $10^{-6} \leq f \leq 0.03$, respectively.

As is clear from the above description, it has heretofore been known that a rare earth element activated divalent metal fluorohalide phosphor represented by the following formula emits light of high luminance upon stimulation thereof;

$$BaF_2 \cdot aBaX_2 \cdot bMgF_2 : fLn$$

wherein X is chlorine, bromine and/or iodine, Ln is europium, cerium and/or terbium, and a, b and f are numbers satisfying the conditions of $0.90 \leq a \leq 1.05$, $0 \leq b \leq 1.2$ and $10^{-6} \leq f \leq 0.03$, respectively. When the above rare earth element activated divalent metal fluorohalide phosphor is employed in a radiation image storage panel, in view of the above-mentioned circumstances, the phosphor is desired to emit light of as high luminance as possible upon stimulation thereof.

Therefore, an object of the present invention is to enhance the luminance of light emitted by the above-mentioned rare earth element activated divalent metal fluorohalide phosphor upon stimulation thereof.

In order to accomplish the above object, the inventors of the present invention conducted various investigations in the above-mentioned rare earth element activated divalent metal fluorohalide phosphor. As a result of the investigations, it was found that the luminance of light emitted by the rare earth element activated divalent metal fluorohalide phosphor upon stimulation thereof was enhanced by incorporating in the phosphor at least one specific alkali metal fluoride, one specific divalent metal fluoride and/or one specific trivalent metal fluoride in a proper amount as additives to the host material of the phosphor.

2

The phosphor of the present invention is a rare earth element activated complex halide phosphor represented by the formula

$$BaF_2 \cdot aBaX_2 \cdot bMgF_2 \cdot cMe^IF \cdot dMe^{II}F_2 \cdot eMe^{III}F_3 : fLn$$

wherein X is chlorine, bromine and/or iodine, $Me^I$ is lithium and/or sodium, $Me^{II}$ is beryllium, calcium and/or strontium, $Me^{III}$ is aluminium, gallium, yttrium and/or lanthanum, Ln is europium, cerium and/or terbium, and a, b, c, d, e and f are numbers satisfying the conditions of $0.90 \leqq a \leqq 1.05$, $0 \leqq b \leqq 1.2$, $0 \leqq c \leqq 0.9$, $0 \leqq d \leqq 1.2$, $0 \leqq e \leqq 0.03$, $10^{-6} \leqq f \leqq 0.03$ and $c+d+e=0$. From the viewpoint of the luminance of light emitted by the phosphor upon stimulation thereof, when $b=0$, the numbers a, c, d, e and f should preferable satisfy the conditions of $0.95 \leqq a \leqq 1.02$, $0.01 \leqq c \leqq 0.5$, $0.01 \leqq d \leqq 0.2$, $0.0005 \leqq e \leqq 0.01$ and $10^{-4} \leqq f \leqq 0.01$, and when $b \neq 0$, the numbers a, b, c, d, e and f should preferably satisfy the conditions of $0.95 \leqq a \leqq 1.02$, $0.005 \leqq b \leqq 0.02$, $0.01 \leqq c \leqq 0.2$, $0.001 \leqq d \leqq 0.01$, $0.0005 \leqq e \leqq 0.01$ and $10^{-4} \leqq f \leqq 0.01$. (The phosphor of the present invention wherein $b=0$ and the other phosphor of the present invention wherein $b \neq 0$ are hereinafter referred to as "Phosphor-I" and "Phosphor-II", respectively).

If in the formula given above, b is zero, compounds are preferred in which c, d and e are $c \neq 0$, $d=0$ and $e=0$; (in this case a, c and f are preferably $0.95 \leqq a \leqq 1.02$, $0.01 \leqq c \leqq 0.5$ and $10^{-4} \leqq f \leqq 0.01$), or c, d and e are $c=0$, $d \neq 0$ and $e=0$; (in this case a, d and f are preferably $0.95 \leqq a \leqq 1.02$, $0.01 \leqq d \leqq 0.2$ and $10^{-4} \leqq f \leqq 0.01$) or c, d and e are $c=0$, $d=0$ and $e \neq 0$; (in this case a, e and f are preferably $0.95 \leqq a \leqq 1.02$, $0.0005 \leqq e \leqq 0.01$ and $10^{-4} \leqq f \leqq 0.01$) or c, d and e are $c \neq 0$, $d \neq 0$ and $e=0$; (in this case a, c, d and f are preferably $0.95 \leqq a \leqq 1.02$, $0.01 \leqq c \leqq 0.5$, $0.01 \leqq d \leqq 0.2$ and $10^{-4} \leqq f \leqq 0.01$), or c, d and e are $c \neq 0$, $d=0$ and $e \neq 0$; (in this case a, c, e and f are preferably $0.95 \leqq a \leqq 1.02$, $0.01 \leqq c \leqq 0.05$, $0.0005 \leqq e \leqq 0.01$ and $10^{-4} \leqq f \leqq 0.01$) or c, d and e are $c=0$, $d \neq 0$ and $e \neq 0$; (in this case a, d, e and f are preferably $0.95 \leqq a \leqq 1.02$, $0.01 \leqq d \leqq 0.2$, $0.0005 \leqq e \leqq 0.01$ and $10^{-4} \leqq f \leqq 0.01$) or c, d and e are $c \neq 0$, $d \neq 0$ and $e \neq 0$; (in this case a, c, d, e and f are preferably $0.95 \leqq a \leqq 1.02$, $0.01 \leqq c \leqq 0.5$, $0.01 \leqq d \leqq 0.2$, $0.0005 \leqq e \leqq 0.01$ and $10^{-4} \leqq f \leqq 0.01$).

If in the formula given above, b is not zero, compounds are preferred, in which c, d and e are $c \neq 0$, $d=0$ and $e=0$; (in this case a, b, c and f are preferably $0.95 \leqq a \leqq 1.02$, $0.005 \leqq b \leqq 0.2$, $0.01 \leqq c \leqq 0.2$ and $10^{-4} \leqq f \leqq 0.01$) or c, d and e are $c=0$, $d \neq 0$ and $e=0$; (in this case a, b, d and f are preferably $0.95 \leqq a \leqq 1.02$, $0.005 \leqq b \leqq 0.2$, $0.001 \leqq d \leqq 0.1$ and $10^{-4} \leqq f \leqq 0.01$), or c, d and e are $c=0$, $d=0$ and $e \neq 0$; (in this case a, b, e and f are preferably $0.95 \leqq a \leqq 1.02$, $0.005 \leqq b \leqq 0.2$, $0.0005 \leqq e \leqq 0.01$ and $10^{-4} \leqq f \leqq 0.01$), or c, d and e are $c \neq 0$, $d \neq 0$ and $e=0$; (in this case a, b, c, d and f are preferably $0.95 \leqq a \leqq 1.02$, $0.005 \leqq b \leqq 0.2$, $0.01 \leqq c \leqq 0.2$, $0.001 \leqq d \leqq 0.1$ and $10^{-4} \leqq f \leqq 0.01$); or c, d and e are $c \neq 0$, $d=0$ and $e \neq 0$; (in this case a, b, c, e and f are preferably $0.95 \leqq a \leqq 1.02$, $0.005 \leqq b \leqq 0.2$, $0.01 \leqq c \leqq 0.2$, $0.0005 \leqq e \leqq 0.01$ and $10^{-4} \leqq f \leqq 0.01$), or c, d and e are $c=0$, $d \neq 0$ and $e \neq 0$; (in this case a, b, d, e and f are preferably $0.95 \leqq a \leqq 1.02$, $0.005 \leqq b \leqq 0.2$, $0.001 \leqq d \leqq 0.1$, $0.0005 \leqq e \leqq 0.01$ and $10^{-4} \leqq f \leqq 0.01$); or c, d and e are $c \neq 0$, $d \neq 0$ and $e \neq 0$; (in this case a, b, c, d, e and f are preferably $0.95 \leqq a \leqq 1.02$, $0.005 \leqq b \leqq 0.2$, $0.01 \leqq c \leqq 0.2$, $0.001 \leqq d \leqq 0.1$, $0.0005 \leqq e \leqq 0.01$ and $10^{-4} \leqq f \leqq 0.01$).

The phosphor of the present invention emits light of higher luminance than the conventional rare earth element activated divalent metal fluorohalide phosphor when it is stimulated by light of wavelength ranging from 450 to 800 nm after exposure to ionizing radiations such as X-rays or $\gamma$-rays, ultraviolet rays, cathode rays, or the like. Further, the phosphor of the present invention is a thermoluminescent phosphor and therefore, emits light of high luminance when heated after exposure to ionizing radiations such as ultraviolet rays or cathode rays.

Figure 1 is a graph showing the relationship between the value c of the $BaF_2 \cdot BaX_2 \cdot cMe^IF : 0.0005Ln$ phosphor of the present invention and the luminance of light emitted by the phosphor upon stimulation thereof,

Figure 2 is a graph showing the relationship between the value d of the $BaF_2 \cdot BaX_2 \cdot dMe^{II}F_2 : 0.0005Ln$ phosphor of the present invention and the luminance of light emitted by the phosphor upon stimulation thereof,

Figure 3 is a graph showing a relationship between value e of the $BaF_2 \cdot BaX_2 \cdot eMe^{III}F_3 : 0.0005Ln$ phosphor of the present invention and the luminance of light emitted by the phosphor upon stimulation thereof,

Figure 4 is a graph showing a relationship between the value c of the $BaF_2 \cdot BaX_2 \cdot 0.02MgF_2 \cdot cMe^IF : 0.0005Ln$ phosphor of the present invention and the luminance of light emitted by the phosphor upon stimulation thereof,

Figure 5 is a graph showing a relationship between the value d of the $BaF_2 \cdot BaX_2 \cdot 0.02MgF_2 \cdot dMe^{II}F_2 : 0.0005Ln$ phosphor of the present invention and the luminance of light emitted by the phosphor upon stimulation thereof, and

Figure 6 is a graph showing a relationship between the value e of the $BaF_2 \cdot BaX_2 \cdot 0.045MgF_2 \cdot eMe^{III}F_3 : 0.0005Ln$ phosphor of the present invention and the luminance of light emitted by the phosphor upon stimulation thereof.

The present invention will hereinbelow be described in detail.

The phosphor of the present invention is prepared by the following process.

The following raw materials are used;

3

**0 021 342**

i) barium fluoride ($BaF_2$),

ii) magnesium fluoride ($MgF_2$),

iii) barium chloride ($BaCl_2$), barium bromide ($BaBr_2$) and/or barium iodide ($BaI_2$),

iv) lithium fluoride (LiF), sodium fluoride (NaF), beryllium fluoride ($BeF_2$), calcium fluoride ($CaF_2$), strontium fluoride ($SrF_2$), aluminium fluoride ($AlF_3$), gallium fluoride ($GaF_3$), yttrium fluoride ($YF_3$) and/or lanthanum fluoride ($LaF_3$), and

v) an europium compound, a cerium compound and/or a terbium compound such as a chloride, fluoride, bromide, nitrate, and oxide.

The above-mentioned raw materials are weighed out in such a ratio that a raw material mixture stoichiometrically represented by the formula of the phosphor of the present invention given above and mixed well by means of a ball mill or a mixer mill.

Then, the raw material mixture is put into a heat-resistant container such as an alumina or quartz crucible, and fired in an electric furnace. The firing is performed at a temperature ranging from 600 to 1000°C, preferably ranging from 700 to 900°C. Although the firing period is determined depending upon the amount of the raw material mixture placed in the heat-resistant container and the firing temperature employed, the firing period is generally within the range of 1 to 6 hours. Although the firing may be performed in the air, the firing is preferably performed in an inert atmosphere such as an argon gas atmosphere or a nitrogen gas atmosphere, or in a weak reducing atmosphere such as a nitrogen gas atmosphere containing a small amount of hydrogen gas or a carbon dioxide gas and/or a carbon monoxide gas. Among the phosphors included in the rare earth element activated complex halide phosphor of the present invention, the phosphor activated with divalent europium is very useful practically. In the preparation of the phosphor, a compound of trivalent europium is used as a new material of europium, and the trivalent europium is reduced to divalent europium during the firing. Accordingly, when the phosphor activated with divalent europium is prepared, the firing should be performed in a weak reducing atmosphere. The luminance of light emitted by the phosphor of the present invention can further be enhanced by firing the raw material mixture under the firing conditions mentioned above, taking out the fired product from the furnace, pulverizing the fired product and then refiring the pulverized product under the same firing conditions. After the firing, the fired product is subjected to the processes generally employed in the production of a phosphor such as pulverizing and sieving to obtain the phosphor of the present invention.

The rare earth element activated complex halide phosphor of the present invention thus prepared exhibits emission of higher luminance than the conventional rare earth element activated divalent metal fluorohalide phosphor upon stimulation thereof. Further, the phosphor of the present invention exhibits thermoluminescence of high luminance.

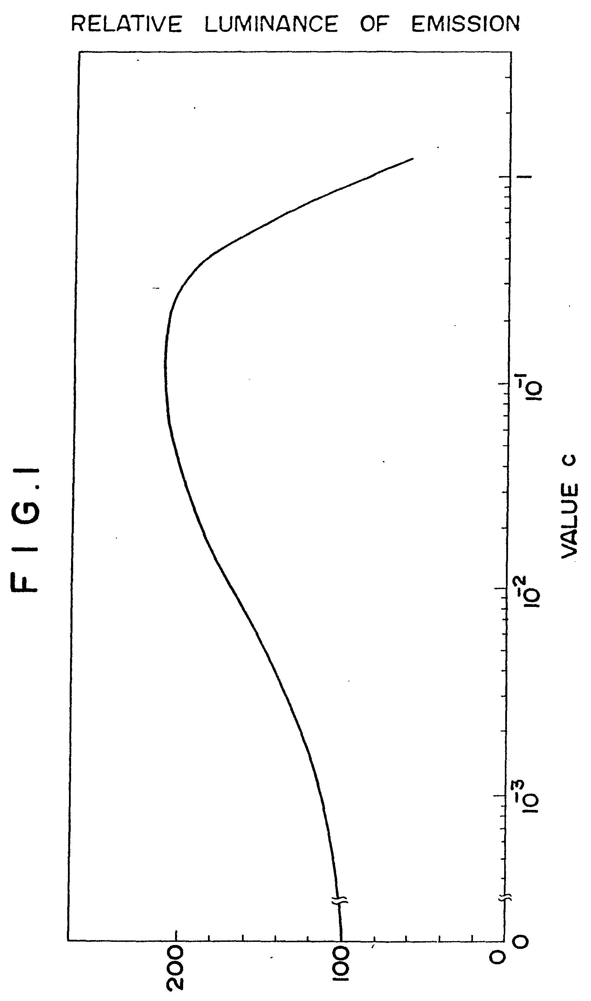

Referring to Figures 1, 2 and 3, the amounts of $Me^{I}F$, $Me^{II}F_2$, and $Me^{III}F_3$ (viz. values c, d and e, respectively) of Phosphor-I of the present invention will hereinbelow be described.

Figure 1 is a graph showing the relationship between the amount of $Me^{I}F$ (value c) of the $BaF_2 \cdot BaX_2 \cdot cMe^{I}F:0.0005Ln$ phosphor included in Phosphor-I and the luminance of light emitted by the phosphor upon stimulation thereof. The data shown in Figure 1 is one measured for the phosphor wherein X, $Me^{I}$ and Ln are bromine, lithium and divalent europium, respectively (viz., the $BaF_2 \cdot BaBr_2 \cdot cLiF:0.0005Eu^{2+}$ phosphor). The measurement of the luminance was performed by exposing the phosphor to X-rays of 80 KVp, and then stimulating the phosphor with light of 630 nm which was obtained by causing the light emitted by a xenon lamp in a spectroscope to pass through a diffraction grating. In Figure 1, the luminance of emission (ordinate axis) is represented by the relative value with respect to that of the conventional $BaF_2 \cdot BaX_2:0.0005Ln$ phosphor in which $Me^{I}F$ is not incorporated (viz., the $BaF_2 \cdot BaBr_2:0.0005Eu^{2+}$ phosphor) defined to be 100.

As is clear from Figure 1, when the value c is $0 < c \leq 0.9$, the $BaF_2 \cdot BaX_2 \cdot cMe^{I}F:0.0005Ln$ phosphor emits light of higher luminance than the conventional $BaF_2 \cdot BaX_2:0.0005Ln$ phosphor upon stimulation thereof. In particular, when the value c is $0.01 \leq c \leq 0.5$, the $BaF_2 \cdot BaX_2 \cdot cMe^{I}F:0.0005Ln$ phosphor emits light of markedly high luminance upon stimulation thereof.

Although Figure 1 shows the data measured for the $BaF_2 \cdot BaBr_2 \cdot cLiF:0.0005Eu^{2+}$ phosphor as described above, it was confirmed that the results similar to that shown in Figure 1 were also obtained with respect to other phosphors included in the $BaF_2 \cdot BaX_2 \cdot cMe^{I}F:0.0005Ln$ phosphor. Further, it was confirmed that the results similar to that shown in Figure 1 were also obtained with respect to other phosphors included in Phosphor-I wherein $Me^{II}F_2$ and/or $Me^{III}F_3$ was incorporated together with $Me^{I}F$.

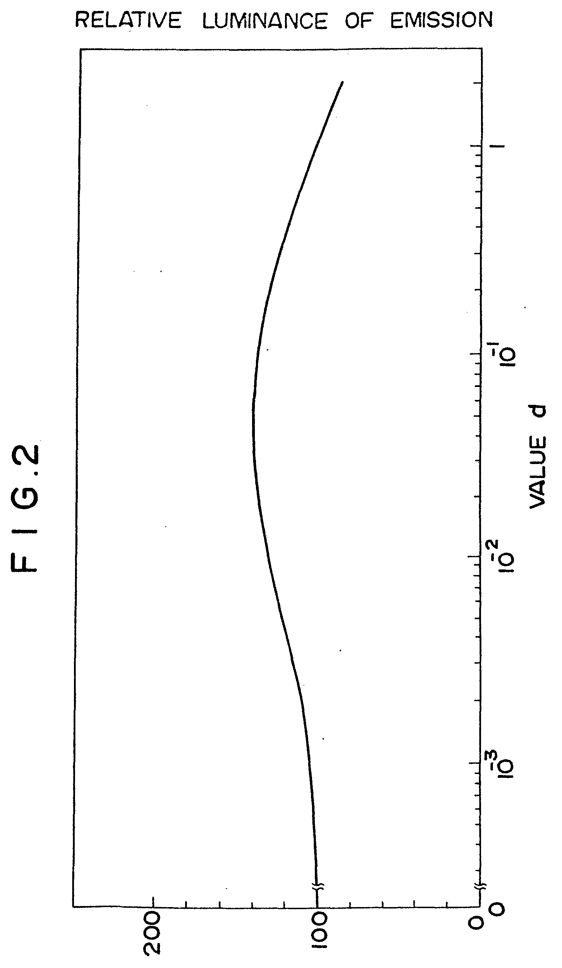

Figure 2 is a graph showing the relationship between the amount of $Me^{II}F_2$ (value d) of the $BaF_2 \cdot BaX_2 \cdot dMe^{II}F_2:0.0005Ln$ phosphor included in Phosphor-I and the luminance of light emitted by the phosphor upon stimulation thereof. The data shown in Figure 2 is one measured for the phosphor wherein X, $Me^{II}$ and Ln are bromine, calcium and divalent europium, respectively (viz., the $BaF_2 \cdot BaBr_2 \cdot dCaF_2:0.0005Eu^{2+}$ phosphor). The measurement of the luminance was performed in the same manner as described in Figure 1. In Figure 2, the luminance of emission (ordinate axis) is represented by the relative value with respect to that of the conventional $BaF_2 \cdot BaX_2:0.0005Ln$ phosphor in which $Me^{II}F_2$ is not incorporated (viz., the $BaF_2 \cdot BaBr_2:0.0005Eu^{2+}$ phosphor) defined to be 100.

As is clear from Figure 2, when the value d is $0 < d \leq 1.2$, the $BaF_2 \cdot BaX_2 \cdot dMe^{II}F_2:0.0005Ln$

4

phosphor emits light of higher luminance than the conventional $BaF_2 \cdot BaX_2:0.0005Ln$ phosphor upon stimulation thereof. In particular, when the value d is $0.01 \leq d \leq 0.2$, the $BaF_2 \cdot BaX_2 \cdot dMe^{II}F_2:0.0005Ln$ phosphor emits light of markedly high luminance upon stimulation thereof.

Although Figure 2 shows the data measured for the $BaF_2 \cdot BaBr_2 \cdot cCaF_2:0.0005Eu^{2+}$ phosphor as described above, it was confirmed that the results similar to that shown in Figure 2 were also obtained with respect to other phosphors included in the $BaF_2 \cdot BaX_2 \cdot dMe^{II}F_2:0.0005Ln$ phosphor. Further, it was confirmed that the results similar to that shown in Figure 2 were also obtained with respect to other phosphors included in Phosphor-I wherein $Me^I F$ and/or $Me^{III}F_3$ was incorporated together with $Me^{II}F_2$.

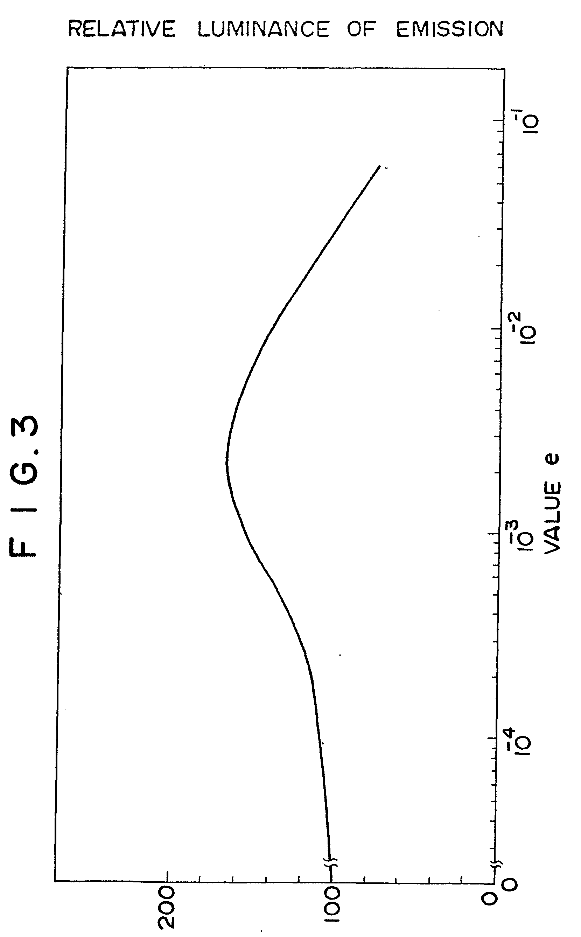

Figure 3 is a graph showing the relationship between the amount of $Me^{III}F_3$ (value e) of the $BaF_2 \cdot BaX_2 \cdot eMe^{III}F_3:0.0005Ln$ phosphor included in Phosphor-I and the luminance of light emitted by the phosphor upon stimulation thereof. The data shown in Figure 3 is one measured for the phosphor wherein X, $Me^{III}$ and Ln are bromine, aluminum and divalent europium, respectively (viz., the $BaF_2 \cdot BaBr_2 \cdot eAlF_3:0.0005Eu^{2+}$ phosphor). The measurement of the luminance of emission was performed in the same manner as described in Figure 1. In Figure 3, the luminance of emission (ordinate axis) is represented by the relative value with respect to that of the conventional $BaF_2 \cdot BaX_2:0.0005Ln$ phosphor in which $Me^{III}F_3$ is not incorporated (viz., the $BaF_2 \cdot BaBr_2:0.0005Eu^{2+}$ phosphor) defined to be 100.

As is clear from Figure 3, when the value e is $0 < e \leq 0.03$, the $BaF_2 \cdot BaX_2 \cdot eMe^{III}F_3:0.0005Ln$ phosphor emits light of higher luminance than the conventional $BaF_2 \cdot BaX_2:0.0005Ln$ phosphor upon stimulation thereof. In particular, when the value e is $0.0005 \leq e \leq 0.01$, the $BaF_2 \cdot BaX_2 \cdot eMe^{III}F_3:0.0005Ln$ phosphor emits light of markedly high luminance upon stimulation thereof.

Although Figure 3 shows the data measured for the $BaF_2 \cdot BaBr_2 \cdot eAlF_3:0.0005Eu^{2+}$ phosphor as described above, it was confirmed that the results similar to that shown in Figure 3 were also obtained with respect to other phosphors included in the $BaF_2 \cdot BaX_2 \cdot eMe^{III}F_3:0.0005Ln$ phosphor. Further, it was confirmed that the results similar to that shown in Figure 3 were also obtained with respect to other phosphors included in Phosphor-I wherein $Me^I F$ and/or $Me^{II}F_2$ was incorporated together with $Me^{III}F_3$.

From the above description referring to Figures 1 to 3, it is concluded that the values c, d and e of Phosphor-I are numbers satisfying the conditions of $0 \leq c \leq 0.9$, $0 \leq d \leq 1.2$, $0 \leq e \leq 0.03$ and $c+d+e \neq 0$. The numbers c, d and e should preferably satisfy the conditions of $0.01 \leq c \leq 0.5$, $0.01 \leq d \leq 0.2$ and $0.0005 \leq e \leq 0.01$, respectively.

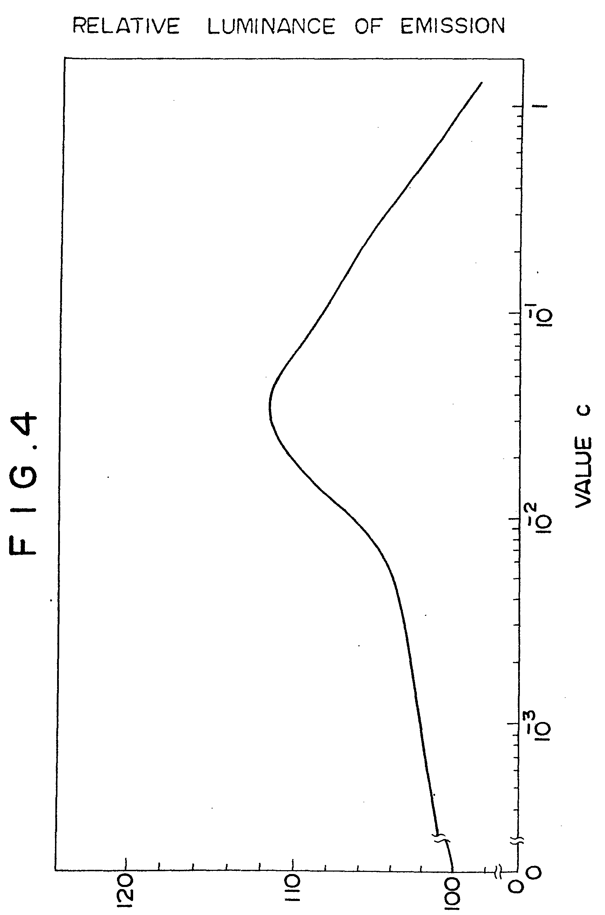

Referring to Figures 4, 5 and 6, the amounts of $Me^I F$, $Me^{II}F_2$ and $Me^{III}F_3$ (viz., values c, d and e, respectively) of Phosphor-II of the present invention will hereinbelow be described.

Figure 4 is a graph showing the relationship between the amount of $Me^I F$ (value c) of the $BaF_2 \cdot BaX_2 \cdot 0.02MgF_2 \cdot cMe^I F:0.0005Ln$ phosphor included in Phosphor-II and the luminance of light emitted by the phosphor upon stimulation thereof. The data shown in Figure 4 is one measured for the phosphor wherein X, $Me^I$ and Ln are bromine, lithium and divalent europium, respectively (viz., the $BaF_2 \cdot BaBr_2 \cdot 0.02MgF_2 \cdot cLiF:0.0005Eu^{2+}$ phosphor). The measurement of the luminance of emission was performed in the same manner as described in Figure 1. In Figure 4, the luminance of emission (ordinate axis) is represented by the relative value with respect to that of the conventional $BaF_2 \cdot BaX_2 \cdot 0.02MgF_2:0.0005Ln$ phosphor in which $Me^I F$ is not incorporated (viz., the $BaF_2 \cdot BaBr_2 \cdot 0.02MgF_2:0.0005Eu^{2+}$ phosphor) defined to be 100.

As is clear from Figure 4, when the value c is $0 < c \leq 0.9$, the $BaF_2 \cdot BaX_2 \cdot 0.02MgF_2 \cdot cMe^I F:0.0005Ln$ phosphor emits light of higher luminance than the conventional $BaF_2 \cdot BaX_2 \cdot 0.02MgF_2:0.0005Ln$ phosphor upon stimulation thereof. In particular, when the value c is $0.01 \leq c \leq 0.2$, the $BaF_2 \cdot BaX_2 \cdot 0.02MgF_2 \cdot cMe^I F:0.0005Ln$ phosphor emits light of markedly high luminance upon stimulation thereof.

Although Figure 4 shows the data measured for the $BaF_2 \cdot BaX_2 \cdot 0.02MgF_2 \cdot cLiF:0.0005Eu^{2+}$ phosphor as described above, it was confirmed that the results similar to that shown in Figure 4 were also obtained with respect to other phosphors included in the $BaF_2 \cdot BaX_2 \cdot 0.02MgF_2 \cdot cMe^I F:0.0005Ln$ phosphor. Further, it was confirmed that the results similar to that shown in Figure 4 were also obtained with respect to other phosphors included in Phosphor-II wherein $Me^{II}F_2$ and/or $Me^{III}F_3$ was incorporated together with $Me^I F$.

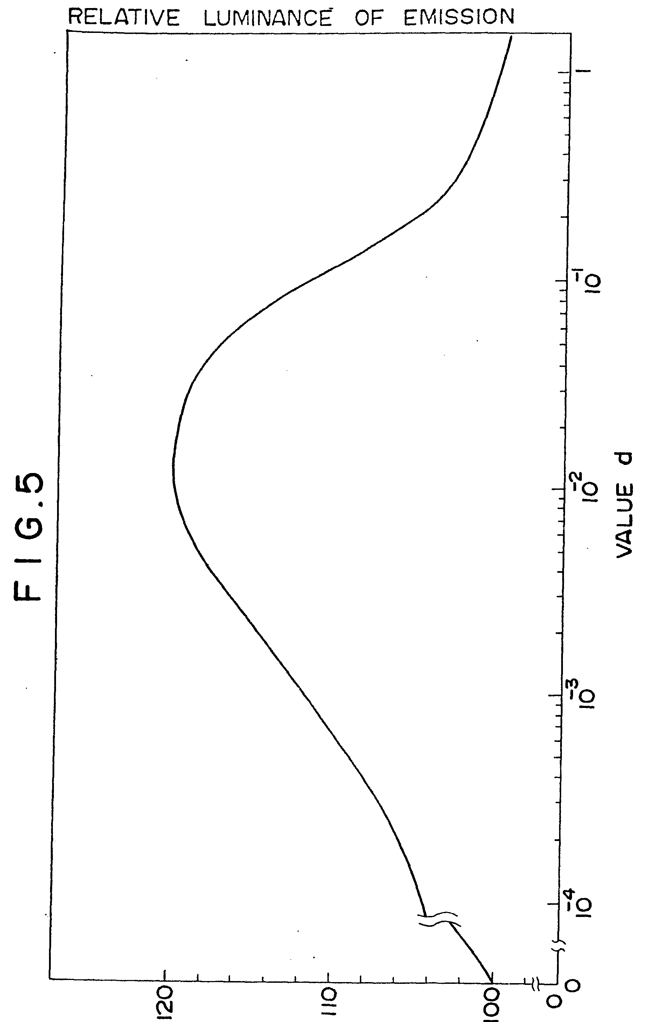

Figure 5 is a graph showing the relationship between the amount of $Me^{II}F_2$ (value d) of the $BaF_2 \cdot BaX_2 \cdot 0.02MgF_2 \cdot dMe^{II}F_2:0.0005Ln$ phosphor included in Phosphor-II and the luminance of light emitted by the phosphor upon stimulation thereof. The data shown in Figure 5 is one measured for the phosphor wherein X, $Me^{II}$ and Ln are bromine, calcium and divalent europium, respectively (viz., the $BaF_2 \cdot BaBr_2 \cdot 0.02MgF_2 \cdot dCaF_2:0.0005Eu^{2+}$ phosphor). The measurement of the luminance of emission was performed in the same manner as described in Figure 1. In Figure 5, the luminance of emission (ordinate axis) is represented by the relative value with respect to that of the conventional $BaF_2 \cdot BaX_2 \cdot 0.02MgF_2:0.0005Ln$ in which $Me^{II}F_2$ is not incorporated (viz., the $BaF_2 \cdot BaBr_2 \cdot 0.02MgF_2:0.0005Eu^{2+}$ phosphor) defined to be 100.

As is clear from Figure 5, when the value d is $0 < d \leq 1.2$, the

$BaF_2 \cdot BaX_2 \cdot 0.02MgF_2 \cdot dMe^{II}F_2{:}0.0005Ln$ phosphor emits light of higher luminance than the conventional $BaF_2 \cdot BaX_2 \cdot 0.02MgF_2{:}0.0005Ln$ phosphor upon stimulation thereof. In particular, when the value d is $0.001 \leq d \leq 0.1$, the $BaF_2 \cdot BaX_2 \cdot 0.02MgF_2 \cdot dMe^{II}F_2{:}0.0005Ln$ phosphor emits light of markedly high luminance upon stimulation thereof.

Although Figure 5 shows the data measured for the $BaF_2 \cdot BaBr_2 \cdot 0.02MgF_2 \cdot cCaF_2{:}0.0005Eu^{2+}$ phosphor as described above, it was confirmed that the results similar to that shown in Figure 5 were also obtained with respect to other phosphors included in the $BaF_2 \cdot BaX_2 \cdot 0.02MgF_2 \cdot dMe^{II}F_2{:}0.0005Ln$ phosphor. Further, it was confirmed that the results similar to that shown in Figure 5 were also obtained with respect to other phosphors included in Phosphor-II wherein $Me^{I}F$ and/or $Me^{III}F_3$ was incorporated together with $Me^{II}F_2$.

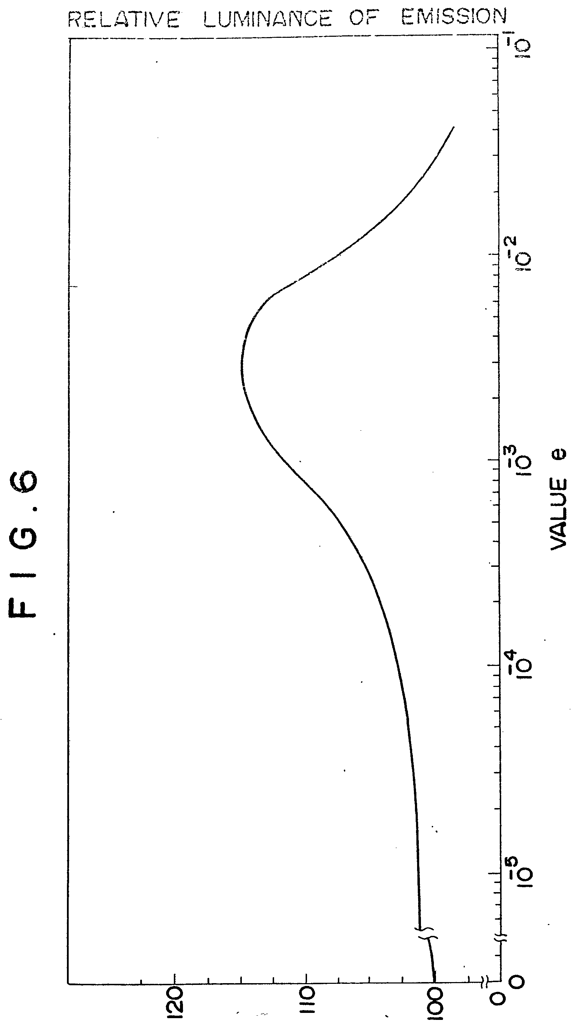

Figure 6 is a graph showing the relationship between the amount of $Me^{III}F_3$ (value e) of the $BaF_2 \cdot BaX_2 \cdot 0.045MgF_2 \cdot eMe^{III}F_3{:}0.0005Ln$ phosphor included in Phosphor-II and the luminance of light emitted by the phosphor upon stimulation thereof. The data shown in Figure 6 is one measured for the phosphor wherein X, $Me^{III}$ and Ln are bromine, aluminum and divalent europium, respectively (viz., the $BaF_2 \cdot BaBr_2 \cdot 0.045MgF_2 \cdot eAl^{III}F_3{:}0.0005Eu^{2+}$ phosphor). The measurement of the luminance of emission (ordinate axis) is represented by the relative value with respect to that of the conventional $BaF_2 \cdot BaX_2 \cdot 0.045MgF_2{:}0.0005Ln$ phosphor in which $Me^{III}F_3$ is not incorporated (viz., the $BaF_2 \cdot BaBr_2 \cdot 0.045MgF_2{:}0.0005Eu^{2+}$ phosphor) defined to be 100.

As is clear from Figure 6, when the value e is $0 < e \leq 0.03$, the $BaF_2 \cdot BaX_2 \cdot 0.045MgF_2 \cdot eMe^{III}F_3{:}0.0005Ln$ phosphor emits light of higher luminance than the conventional $BaF_2 \cdot BaX_2 \cdot 0.045MgF_2{:}0.0005Ln$ phosphor upon stimulation thereof. In particular, when the value e is $0.0005 \leq e \leq 0.01$, the $BaF_2 \cdot BaX_2 \cdot 0.045MgF_2 \cdot eMe^{III}F_3{:}0.0005Ln$ phosphor emits light of markedly high luminance upon stimulation thereof.

Although Figure 6 shows the data measured for the $BaF_2 \cdot BaBr_2 \cdot 0.045MgF_2 \cdot eAlF_3{:}0.0005Eu^{2+}$ phosphor as described above, it was confirmed that the results similar to that shown in Figure 6 were also obtained with respect to other phosphors included in the $BaF_2 \cdot BaX_2 \cdot 0.045MgF_2 \cdot eMe^{III}F_3{:}0.0005Ln$ phosphor. Further, it was confirmed that the results similar to that shown in Figure 6 were also obtained with respect to other phosphors included in Phosphor-II wherein $Me^{I}F$ and/or $Me^{II}F_2$ was incorporated together with $Me^{III}F_3$.

From the above description referring to Figures 4 to 6, it is concluded that the values c, d and e of Phosphor-II are numbers satisfying the conditions of $0 \leq c \leq 0.9$, $0 \leq d \leq 1.2$, $0 \leq e \leq 0.03$ and $c+d+e \neq 0$. The numbers c, d and e should preferably satisfy the conditions of $0.01 \leq c \leq 0.2$, $0.001 \leq d \leq 0.1$ and $0.0005 \leq e \leq 0.01$, respectively.

In the phosphor of the present invention, the ranges of the amounts of $BaX_2$ and $MgF_2$ (the ranges of values a and b, respectively) which constitute the host material of the phosphor together with at least one of $Me^{I}F$, $Me^{II}F_2$ and $Me^{III}F_3$ are the same as those of the conventional rare earth element activated divalent metal fluorohalide phosphor. Further, the range of amount of Ln (the range of value f) which is the activator of the phosphor is the same as that of the conventional rare earth element activated divalent metal fluorohalide phosphor. That is, the values a, b and f are $0.90 \leq a \leq 1.05$, $0 \leq b \leq 1.2$ and $10^{-6} \leq f \leq 0.03$, respectively. From the viewpoint of the luminance of light emitted by the phosphor upon stimulation thereof, the values a, b and f are preferably $0.95 \leq a \leq 1.02$, $0.005 \leq b \leq 0.2$ (when $MgF_2$ is incorporated in the phosphor) and $10^{-4} \leq f \leq 0.01$, respectively.

As described hereinabove, the phosphor of the present invention emits light of higher luminance than the conventional rare earth element activated divalent metal fluorohalide phosphor when stimulated by light of wavelength ranging from 450 to 800 nm after exposure to ionizing radiations such as X-rays or $\gamma$-rays, ultraviolet rays, cathode rays, or the like. Accordingly, the radiation image storage panel employing the phosphor of the present invention has a high sensitivity than the radiation image storage panel employing the conventional rare earth element activated divalent metal fluorohalide phosphor. Further, the phosphor of the present invention emits thermoluminescent light of high luminance when heated after exposure to ionizing radiations such as ultraviolet rays or cathode rays and accordingly, can be used in a thermoluminescent dosimeter.

The present invention will hereinbelow be described referring to an example.

Example

The following 41 kinds of combinations of raw materials were weighed out and each combination was mixed well by means of a ball mill to prepare 41 kinds of raw material mixtures (1) to (41).

(1) 175.3 grams (1 mol) of $BaF_2$, 297.1 grams (1 mol) of $BaBr_2$, 5.2 grams (0.2 mols) of LiF and 0.129 grams (0.0005 mols) of $EuCl_3$,

(2) 175.3 grams (1 mol) of $BaF_2$, 297.1 grams (1 mol) of $BaBr_2$, 4.7 grams (0.1 mols) of $BeF_2$ and 0.129 grams (0.0005 mols) of $EuCl_3$,

(3) 175.3 grams (1 mol) of $BaF_2$, 294.1 grams (0.99 mols) of $BaBr_2$, 0.25 grams (0.003 mols) of $AlF_3$ and 0.026 grams (0.0001 mols) of $EuCl_3$,

(4) 175.3 grams (1 mol) of $BaF_2$, 297.1 grams (1 mol) of $BaBr_2$, 3.9 grams (0.05 mols) of $CaF_2$ and 0.052 grams (0.0002 mols) of $EuCl_3$,

**0 021 342**

(5) 175.3 grams (1 mol) of $BaF_2$, 297.1 grams (1 mol) of $BaBr_2$, 12.6 grams (0.1 mols) of $SrF_2$ and 0.052 grams (0.0002 mols) of $EuCl_3$,

(6) 175.3 grams (1 mol) of $BaF_2$, 297.1 grams (1 mol) of $BaBr_2$, 0.98 grams (0.005 mols) of $LaF_3$ and 0.052 grams (0.0002 mols) of $EuCl_3$,

(7) 175.3 grams (1 mol) of $BaF_2$, 294.1 grams (0.99 mols) of $BaBr_2$, 0.26 grams (0.01 mols) of LiF, 0.42 grams (0.01 mols) of NaF and 0.077 grams (0.0003 mols) of $EuCl_3$,

(8) 175.3 grams (1 mol) of $BaF_2$, 291.2 grams (0.98 mols) of $BaBr_2$, 2.4 grams (0.05 mols) of $BeF_2$, 3.9 grams (0.05 mols) of $CaF_2$ and 0.077 grams (0.0003 mols) of $EuCl_3$,

(9) 175.3 grams (1 mol) of $BaF_2$, 294.1 grams (0.99 mols) of $BaBr_2$, 0.52 grams (0.02 mols) of LiF, 0.17 grams (0.002 mols) of $AlF_3$ and 0.129 grams (0.0005 mols) of $EuCl_3$,

(10) 175.3 grams (1 mol) of $BaF_2$, 297.1 grams (1 mol) of $BaBr_2$, 0.26 grams (0.01 mols) of LiF, 15.6 grams (0.2 mols) of $CaF_2$, 0.08 grams (0.001 mols) of $AlF_3$ and 0.129 grams (0.0005 mols) of $EuCl_3$,

(11) 175.3 grams (1 mol) of $BaF_2$, 210.3 grams (1.01 mols) of $BaCl_2$, 4.2 grams (0.1 mols) of NaF and 0.104 grams (0.0005 mols) of $EuF_3$,

(12) 175.3 grams (1 mol) of $BaF_2$, 208.2 grams (1 mol) of $BaCl_2$, 0.26 grams (0.01 mols) of LiF, 12.6 grams (0.1 mols) of $SrF_2$ and 0.104 grams (0.0005 mols) of $EuF_3$,

(13) 175.3 grams (1 mol) of $BaF_2$, 212.4 grams (1.02 mols) of $BaCl_2$, 7.8 grams (0.1 mols) of $CaF_2$ and 0.033 grams (0.0001 mols) of $Ce(NO_3)_3$,

(14) 175.3 grams (1 mol) of $BaF_2$, 237.7 grams (0.8 mols) of $BaBr_2$, 39.6 grams (0.19 mols) of $BaCl_2$, 2.4 grams (0.05 mols) of $BeF_2$, 0.08 grams (0.001 mols) of $AlF_3$ and 0.104 grams (0.0005 mols) of $EuF_3$,

(15) 175.3 grams (1 mol) of $BaF_2$, 208.2 grams (1 mol) of $BaCl_2$, 1.3 grams (0.01 mols) of $GaF_3$, 0.026 grams (0.0001 mols) of $EuCl_3$ and 0.005 grams (0.00002 mols) of $TbCl_3$,

(16) 175.3 grams (1 mol) of $BaF_2$, 297.1 grams (1 mol) of $BaBr_2$, 1.5 grams (0.01 mols) of $YF_3$, 0.042 grams (0.0002 mols) of $EuF_3$ and 0.007 grams (0.00002 mols) of $Ce(NO_3)_3$,

(17) 175.3 grams (1 mol) of $BaF_2$, 291.2 grams (0.98 mols) of $BaBr_2$, 0.08 grams (0.001 mols) of $AlF_3$, 0.13 grams (0.001 mols) of $GaF_3$, 0.026 grams (0.0001 mols) of $EuCl_3$ and 0.0025 grams (0.00001 mols) of $TbCl_3$,

(18) 175.3 grams (1 mol) of $BaF_2$, 391.1 grams (1 mol) of $BaI_2$, 4.7 grams (0.1 mols) of $BeF_2$ and 0.209 grams (0.001 mols) of $EuF_3$,

(19) 175.3 grams (1 mol) of $BaF_2$, 285.2 grams (0.96 mols) of $BaBr_2$, 11.7 grams (0.03 mols) of $BaI_2$, 0.52 grams (0.02 mols) of LiF and 0.077 grams (0.0003 mols) of $EuCl_3$,

(20) 175.3 grams (1 mol) of $BaF_2$, 288.2 grams (0.97 mols) of $BaBr_2$, 11.7 grams (0.03 mols) of $BaI_2$, 0.26 grams (0.01 mols) of LiF, 0.78 grams (0.01 mols) of $CaF_2$ and 0.063 grams (0.0003 mols) of $EuF_3$,

(21) 175.3 grams (1 mol) of $BaF_2$, 297.1 grams (1 mol) of $BaBr_2$, 1.2 grams (0.02 mols) of $MgF_2$, 1.8 grams (0.04 mols) of LiF and 0.129 grams (0.0005 mols) of $EuCl_3$,

(22) 175.3 grams (1 mol) of $BaF_2$, 297.1 grams (1 mol) of $BaBr_2$, 1.2 grams (0.02 mols) of $MgF_2$, 0.042 grams (0.01 mols) of NaF and 0.129 grams (0.0005 mols) of $EuCl_3$,

(23) 175.3 grams (1 mol) of $BaF_2$, 282.2 grams (0.95 mols) of $BaBr_2$, 1.2 grams (0.02 mols) of $MgF_2$, 0.78 grams (0.01 mols) of $CaF_2$ and 0.129 grams (0.0005 mols) of $EuCl_3$,

(24) 175.3 grams (1 mol) of $BaF_2$, 297.1 grams (1 mol) of $BaBr_2$, 1.2 grams (0.02 mols) of $MgF_2$, 0.47 grams (0.01 mols) of $BeF_2$ and 0.129 grams (0.0005 mols) of $EuCl_3$,

(25) 175.3 grams (1 mol) of $BaF_2$, 303.0 grams (1.02 mols) of $BaBr_2$, 3.12 grams (0.05 mols) of $MgF_2$, 2.52 grams (0.02 mols) of $SrF_2$ and 0.129 grams (0.0005 mols) of $EuCl_3$,

(26) 175.3 grams (1 mol) of $BaF_2$, 297.1 grams (1 mol) of $BaBr_2$, 0.62 grams (0.01 mols) of $MgF_2$, 0.25 grams (0.001 mols) of $AlF_3$ and 0.129 grams (0.0005 mols) of $EuCl_3$,

(27) 175.3 grams (1 mol) of $BaF_2$, 297.1 grams (1 mol) of $BaBr_2$, 0.62 grams (0.01 mols) of $MgF_2$, 0.13 grams (0.001 mols) of $GaF_3$ and 0.129 grams (0.0005 mols) of $EuCl_3$,

(28) 175.3 grams (1 mol) of $BaF_2$, 291.2 grams (0.98 mols) of $BaBr_2$, 3.12 grams (0.05 mols) of $MgF_2$, 0.15 grams (0.001 mols) of $YF_3$ and 0.129 grams (0.0005 mols) of $EuCl_3$,

(29) 175.3 grams (1 mol) of $BaF_2$, 300.1 grams (1.01 mols) of $BaBr_2$, 0.62 grams (0.01 mols) of $MgF_2$, 0.20 grams (0.001 mols) of $LaF_3$ and 0.129 grams (0.0005 mols) of $EuCl_3$,

(30) 175.3 grams (1 mol) of $BaF_2$, 297.1 grams (1 mol) of $BaBr_2$, 0.31 grams (0.005 mols) of $MgF_2$, 3.1 grams (0.07 mols) of LiF, 1.6 grams (0.02 mols) of $CaF_2$ and 0.104 grams (0.0005 mols) of $EuF_3$,

(31) 175.3 grams (1 mol) of $BaF_2$, 297.1 grams (1 mol) of $BaBr_2$, 0.62 grams (0.01 mols) of $MgF_2$, 2.3 grams (0.05 mols) of LiF, 0.08 grams (0.001 mols) of $AlF_3$ and 0.104 grams (0.0005 mols) of $EuF_3$,

(32) 175.3 grams (1 mol) of $BaF_2$, 297.1 grams (1 mol) of $BaBr_2$, 0.62 grams (0.01 mols) of $MgF_2$, 0.78 grams (0.01 mols) of $CaF_2$, 0.15 grams (0.001 mols) of $YF_3$ and 0.104 grams (0.0005 mols) of $EuF_3$,

(33) 175.3 grams (1 mol) of $BaF_2$, 208.2 grams (1 mol) of $BaCl_2$, 0.62 grams (0.01 mols) of $MgF_2$, 1.2 grams (0.05 mols) of LiF and 0.258 grams (0.001 mols) of $EuCl_3$,

(34) 175.3 grams (1 mol) of $BaF_2$, 208.2 grams (1 mol) of $BaCl_2$, 3.1 grams (0.05 mols) of $MgF_2$, 0.78 grams (0.01 mols) of $CaF_2$ and 0.258 grams (0.001 mols) of $EuCl_3$,

(35) 175.3 grams (1 mol) of $BaF_2$, 208.2 grams (1 mol) of $BaCl_2$, 3.1 grams (0.05 mols) of $MgF_2$, 0.42 grams (0.005 mols) of $AlF_3$ and 0.258 grams (0.001 mols) of $EuCl_3$,

(36) 175.3 grams (1 mol) of $BaF_2$, 267.4 grams (0.9 mols) of $BaBr_2$, 39.1 grams (0.1 mols) of $BaI_2$, 6.2 grams (0.1 mols) of $MgF_2$, 0.45 grams (0.01 mols) of LiF and 0.104 grams (0.0005 mols) of $EuF_3$,

(37) 175.3 grams (1 mol) of $BaF_2$, 267.4 grams (0.9 mols) of $BaBr_2$, 39.1 grams (0.1 mols) of $BaI_2$, 6.2 grams (0.1 mols) of $MgF_2$, 0.78 grams (0.01 mols) of $CaF_2$ and 0.104 grams (0.0005 mols) of $EuF_3$,

(38) 175.3 grams (1 mol) of $BaF_2$, 297.1 grams (1 mol) of $BaBr_2$, 3.1 grams (0.05 mols) of $MgF_2$, 0.08 grams (0.001 mols) of $AlF_3$ and 0.033 grams (0.0001 mols) of $Ce(NO_3)_3$,

(39) 175.3 grams (1 mol) of $BaF_2$, 297.1 grams (1 mol) of $BaBr_2$, 3.1 grams (0.05 mols) of $MgF_2$, 0.45 grams (0.01 mols) of LiF, 0.026 grams (0.0001 mols) of $EuCl_3$ and 0.003 grams (0.00001 mols) of $Ce(NO_3)_3$,

(40) 175.3 grams (1 mol) of $BaF_2$, 267.4 grams (0.9 mols) of $BaBr_2$, 20.8 grams (0.1 mols) of $BaCl_2$, 6.2 grams (0.1 mols) of $MgF_2$, 0.78 grams (0.01 mols) of $CaF_2$, 0.129 grams (0.0005 mols) of $EuCl_3$ and 0.003 grams (0.00001 mols) of $Tb(NO_3)_3$,

(41) 175.3 grams (1 mol) of $BaF_2$, 291.2 grams (0.98 mols) of $BaCl_2$, 3.1 grams (0.05 mols) of $MgF_2$, 0.45 grams (0.01 mols) of LiF, 0.03 grams (0.0001 mols) of $Ce(NO_3)_3$ and 0.003 grams (0.00001 mols) of $Tb(NO_3)_3$.

Then, the raw material mixtures (1) to (41) obtained were put into respective alumina crucibles with a lid and fired in an electric furnace. The raw material mixtures (1) to (17) and (21) to (37) were fired at a temperature of 850°C for 3 hours with coconut carbon granules (particle size corresponding to a sieve having 2 to 8 mesh per 25,4 mm). The raw material mixtures (36) to (41) were fired at a temperature of 820°C for 3 hours with coconut carbon granules (particle size corresponding to a sieve having 2 to 8 mesh per 25,4 mm). The raw material mixtures (18) to (20) were fired at a temperature of 800°C for 3 hours in a nitrogen gas atmosphere containing 2% of hydrogen gas. After the firing, the fired products of the mixtures (1) to (41) obtained were taken out of the furnace, cooled in the air, and then pulverized. The pulverized products (1) to (41) were sieved using a sieve of 150 mesh to obtain phosphors (1) to (41), respectively.

Then, the luminance of light emitted by phosphors (1) to (41) upon stimulation thereof was measured. The measurement of the luminance was performed by exposing each phosphor to X-rays of 80 KVp, and then stimulating each phosphor with light of 630 nm which was obtained by causing the light emitted by a xenon lamp in a spectroscope to pass through a diffraction grating.

As shown in the table below, the luminance of emission of any one of phosphors (1) to (41) upon stimulation thereof was higher than that of the corresponding conventional rare earth element activated divalent metal fluorohalide phosphor measured under the same conditions.

| Phosphor | Formula of the phosphor | Luminance* |
|---|---|---|
| Conventional (1) | $BaF_2 \cdot BaBr_2:0.0005Eu^{2+}$<br>$BaF_2 \cdot BaBr_2 \cdot 0.2LiF:0.0005Eu^{2+}$ | 100<br>210 |
| Conventional (2) | $BaF_2 \cdot BaBr_2:0.0005Eu^{2+}$<br>$BaF_2 \cdot BaBr_2 \cdot 0.1BeF_2:0.0005Eu^{2+}$ | 100<br>130 |
| Conventional (3) | $BaF_2 \cdot 0.00BaBr_2:0.0001Eu^{2+}$<br>$BaF_2 \cdot 0.99BaBr_2 \cdot 0.003AlF_3:0.0001Eu^{2+}$ | 100<br>165 |
| Conventional (4) | $BaF_2 \cdot BaBr_2:0.0002Eu^{2+}$<br>$BaF_2 \cdot BaBr_2 \cdot 0.05CaF_2:0.0002Eu^{2+}$ | 100<br>130 |
| Conventional (5) | $BaF_2 \cdot BaBr_2:0.0002Eu^{2+}$<br>$BaF_2 \cdot BaBr_2 \cdot 0.1SrF_2:0.0002Eu^{2+}$ | 100<br>120 |
| Conventional (6) | $BaF_2 \cdot BaBr_2:0.0002Eu^{5+}$<br>$BaF_2 \cdot BaBr_2 \cdot 0.005LaF_3:0.0002Eu^{2+}$ | 100<br>110 |
| Conventional (7) | $BaF_2 \cdot 0.99BaBr_2:0.0003Eu^{2+}$<br>$BaF_2 \cdot 0.99BaBr_2 \cdot 0.02(Li_{0.5}, Na_{0.5})F:0.0003Eu^{2+}$ | 100<br>125 |
| Conventional (8) | $BaF_2 \cdot 0.98BaBr_2:0.0003Eu^{2+}$<br>$BaF_2 \cdot 0.98BaBr_2 \cdot 0.1(Be_{0.5}, Ca_{0.5})F:0.0003Eu^{2+}$ | 100<br>120 |

| Phosphor | Formula of the phosphor | Luminance* |
|---|---|---|
| Conventional (9) | $BaF_2 \cdot 0.99BaBr_2{:}0.0005Eu^{2+}$<br>$BaF_2 \cdot 0.099BaBr_2 \cdot 0.02LiF \cdot 0.002AlF_3{:}0.0005Eu^{2+}$ | 100<br>170 |
| Conventional (10) | $BaF_2 \cdot BaBr_2{:}0.0005Eu^{2+}$<br>$BaF_2 \cdot BaBr_2 \cdot 0.01LiF \cdot 0.2CaF_2 \cdot 0.001AlF_3{:}0.0005Eu^{2+}$ | 100<br>115 |
| Conventional )11) | $BaF_2 \cdot 1.01BaCl_2{:}0.0005Eu^{2+}$<br>$BaF_2 \cdot 1.01BaCl_2 \cdot 0.1NaF{:}0.0005Eu^{2+}$ | 100<br>110 |
| Conventional (12) | $BaF_2 \cdot BaCl_2{:}0.0005Eu^{2+}$<br>$BaF_2 \cdot BaCl_2 \cdot 0.01LiF \cdot 0.1SrF_2{:}0.0005Eu^{2+}$ | 100<br>120 |
| Conventional (13) | $BaF_2 \cdot 1.02BaCl_2{:}0.0001Ce$<br>$BaF_2 \cdot 1.02BaCl_2 \cdot 0.1CaF_2{:}0.0001Ce$ | 100<br>140 |
| Conventional (14) | $BaF_2 \cdot 0.99Ba(Br_{0.81}, Cl_{0.19})_2{:}0.0005Eu^{2+}$<br>$BaF_2 \cdot 0.99Ba(Br_{0.81}, Cl_{0.19})_2 \cdot 0.05BeF_2 \cdot$<br>$0.001AlF_3{:}0.0005Eu^{2+}$ | 100<br>130 |
| Conventional (15) | $BaF_2 \cdot BaCl_2{:}0.0001Eu^{2+}, 0.00002Tb$<br>$BaF_2 \cdot BaCl_2 \cdot 0.01GaF_3{:}0.0001Eu^{2+}, 0.00002Tb$ | 100<br>120 |
| Conventional (16) | $BaF_2 \cdot BaBr_2{:}0.0002Eu^{2+}, 0.00002Ce$<br>$BaF_2 \cdot BaBr_2 \cdot 0.01YF_3{:}0.0002Eu^{2+}, 0.00002Ce$ | 100<br>120 |
| Conventional (17) | $BaF_2 \cdot 0.098BaBr_2{:}0.0001Eu^{2+}, 0.00001Tb$<br>$BaF_2 \cdot 0.98BaBr_2 \cdot 0.002(Al_{0.5}, Ga_{0.5})F_3{:}0.0001Eu^{2+}, 0.00001Tb$ | 100<br>135 |
| Conventional (18) | $BaF_2 \cdot BaI_2{:}0.001Eu^{2+}$<br>$BaF_2 \cdot BaI_2 \cdot 0.1BeF_2{:}0.001Eu^{2+}$ | 100<br>150 |
| Conventional (19) | $BaF_2 \cdot 0.99Ba(Br_{0.97}, I_{0.03})_2{:}0.0003Eu^{2+}$<br>$BaF_2 \cdot 0.99Ba(Br_{0.97}, I_{0.03})_2 \cdot 0.02LiF{:}0.0003Eu^{2+}$ | 100<br>130 |
| Conventional (20) | $BaF_2 \cdot Ba(Br_{0.97}, I_{0.03})_2{:}0.0003Eu^{2+}$<br>$BaF_2 \cdot Ba(Br_{0.97}, I_{0.03})_2 \cdot 0.01LiF \cdot 0.01CaF_2{:}0.0003Eu^{2+}$ | 100<br>120 |
| Conventional (21) | $BaF_2 \cdot BaBr_2 \cdot 0.02MgF_2{:}0.0005Eu^{2+}$<br>$BaF_2 \cdot BaBr_2 \cdot 0.02MgF_2 \cdot 0.04LiF{:}0.0005Eu^{2+}$ | 100<br>112 |
| Conventional (22) | $BaF_2 \cdot BaBr_2 \cdot 0.02MgF_2{:}0.0005Eu^{2+}$<br>$BaF_2 \cdot BaBr_2 \cdot 0.02MgF_2 \cdot 0.01NaF{:}0.0005Eu^{2+}$ | 100<br>115 |
| Conventional (23) | $BaF_2 \cdot 0.95 BaBr_2 \cdot 0.02MgF_2{:}0.0005Eu^{2+}$<br>$BaF_2 \cdot 0.95BaBr_2 \cdot 0.02MgF_2 \cdot 0.01CaF_2{:}0.0005Eu^{2+}$ | 100<br>120 |
| Conventional (24) | $BaF_2 \cdot BaBr_2 \cdot 0.02MgF_2{:}0.0005Eu^{2+}$<br>$BaF_2 \cdot BaBr_2 \cdot 0.02MgF_2 \cdot 0.01BeF_2{:}0.0005Eu^{2+}$ | 100<br>115 |
| Conventional (25) | $BaF_2 \cdot 1.02BaBr_2 \cdot 0.05MgF_2{:}0.0005Eu^{2+}$<br>$BaF_2 \cdot 1.02BaBr_2 \cdot 0.05MgF_2 \cdot 0.02SrF_2{:}0.0005Eu^{2+}$ | 100<br>120 |
| Conventional (26) | $BaF_2 \cdot BaBr_2 \cdot 0.01MgF_2{:}0.0005Eu^{2+}$<br>$BaF_2 \cdot BaBr_2 \cdot 0.01MgF_2 \cdot 0.03AlF_3{:}0.0005Eu^{2+}$ | 100<br>115 |
| Conventional (27) | $BaF_2 \cdot BaBr_2 \cdot 0.01MgF_2{:}0.0005Eu^{2+}$<br>$BaF_2 \cdot BaBr_2 \cdot 0.01MgF_2 \cdot 0.001GaF_3{:}0.0005Eu^{2+}$ | 100<br>105 |
| Conventional (28) | $BaF_2 \cdot 0.98BaBr_2 \cdot 0.05MgF_2{:}0.0005Eu^{2+}$<br>$BaF_2 \cdot 0.98BaBr_2 \cdot 0.05MgF_2 \cdot 0.001YF_3{:}0.0005Eu^{2+}$ | 100<br>107 |

| Phosphor | Formula of the phosphor | Luminance* |
|---|---|---|
| Conventional (29) | $BaF_2 \cdot 1.01BaBr_2 \cdot 0.01MgF_2{:}0.0005Eu^{2+}$<br>$BaF_2 \cdot 1.01BaBr_2 \cdot 0.01MgF_2 \cdot 0.001LaF_3{:}0.0005Eu^{2+}$ | 100<br>103 |
| Conventional (30) | $BaF_2 \cdot BaBr_2 \cdot 0.005MgF_2{:}0.0005Eu^{2+}$<br>$BaF_2 \cdot BaBr_2 \cdot 0.005MgF_2 \cdot 0.07LiF \cdot 0.02CaF_2{:}0.0005Eu^{2+}$ | 100<br>110 |
| Conventional (31) | $BaF_2 \cdot BaBr_2 \cdot 0.01MgF_2{:}0.0005Eu^{2+}$<br>$BaF_2 \cdot BaBr_2 \cdot 0.01MgF_2 \cdot 0.05LiF \cdot 0.001AlF_3{:}0.0005Eu^{2+}$ | 100<br>118 |
| Conventional (32) | $BaF_2 \cdot BaBr_2 \cdot 0.01MgF_2{:}0.0005Eu^{2+}$<br>$BaF_2 \cdot BaBr_2 \cdot 0.01MgF_2 \cdot 0.01CaF_2 \cdot 0.001YF_3{:}0.0005Eu^{2+}$ | 100<br>110 |
| Conventional (33) | $BaF_2 \cdot BaCl_2 \cdot 0.01MgF_2{:}0.001Eu^{2+}$<br>$BaF_2 \cdot BaCl_2 \cdot 0.01MgF_2 \cdot 0.05LiF{:}0.001Eu^{2+}$ | 100<br>120 |
| Conventional (34) | $BaF_2 \cdot BaCl_2 \cdot 0.05MgF_2{:}0.001Eu^{2+}$<br>$BaF_2 \cdot BaCl_2 \cdot 0.05MgF_2 \cdot 0.01CaF_2{:}0.001Eu^{2+}$ | 100<br>125 |
| Conventional (35) | $BaF_2 \cdot BaCl_2 \cdot 0.05MgF_2{:}0.001Eu^{2+}$<br>$BaF_2 \cdot BaCl_2 \cdot 0.05MgF_2 \cdot 0.005AlF_3{:}0.001Eu^{2+}$ | 100<br>110 |
| Conventional (36) | $BaF_2 \cdot Ba(Br_{0.9}, I_{0.1})_2 \cdot 0.1MgF_2{:}0.0005Eu^{2+}$<br>$BaF_2 \cdot Ba(Br_{0.9}, I_{0.1})_2 \cdot 0.1MgF_2 \cdot 0.01LiF{:}0.0005Eu^{2+}$ | 100<br>115 |
| Conventional (37) | $BaF_2 \cdot Ba(Br_{0.9}, I_{0.1})_2 \cdot 0.1MgF_2{:}0.0005Eu^{2+}$<br>$BaF_2 \cdot Ba(Br_{0.9}, I_{0.1})_2 \cdot 0.1MgF_2 \cdot 0.01CaF_2{:}0.0005Eu^{2+}$ | 100<br>105 |
| Conventional (38) | $BaF_2 \cdot BaBr_2 \cdot 0.05MgF_2{:}0.0001Ce$<br>$BaF_2 \cdot BaBr_2 \cdot 0.05MgF_2 \cdot 0.001AlF_3{:}0.0001Ce$ | 100<br>110 |
| Conventional (39) | $BaF_2 \cdot BaBr_2 \cdot 0.05MgF_2{:}0.0001Eu^{2+}, 0.00001Ce$<br>$BaF_2 \cdot BaBr_2 \cdot 0.05MgF_2 \cdot 0.01LiF{:}0.0001Eu^{2+}, 0.00001Ce$ | 100<br>108 |
| Conventional (40) | $BaF_2 \cdot Ba(Br_{0.9}, Cl_{0.1})_2 \cdot 0.1MgF_2{:}0.0005Eu^{2+}, 0.00001Tb$<br>$BaF_2 \cdot Ba(Br_{0.9}, Cl_{0.1})_2 \cdot 0.1MgF_2 \cdot 0.01CaF_2{:}0.0005Eu^{2+}, 0.00001Tb$ | 100<br>115 |
| Conventional (41) | $BaF_2 \cdot 0.98BaCl_2 \cdot 0.05MgF_2{:}0.0001Ce, 0.00001Tb$<br>$BaF_2 \cdot 0.98BaCl_2 \cdot 0.05MgF_2 \cdot 0.01LiF{:}0.0001Ce, 0.00001Tb$ | 100<br>110 |

*The luminance of emission is represented by a relative value with reference to that of the conventional phosphor defined to be 100.

## Claims

1. A rare earth element activated complex halide phosphor represented by the formula

$$BaF_2 \cdot aBaX_2 \cdot bMgF_2 \cdot cMe^IF \cdot dMe^{II}F_2 \cdot eMe^{III}F_3{:}fLn$$

wherein X is chlorine, bromine and/or iodine, $Me^I$ is lithium and/or sodium, $Me^{II}$ is beryllium, calcium and/or strontium, $Me^{III}$ is aluminium, gallium, yttrium and/or lanthanum, Ln is europium, cerium and/or terbium, and a, b, c, d, e and f are numbers satisfying the conditions of $0.90 \leqq a \leqq 1.05$, $0 \leqq b \leqq 1.2$, $0 \leqq c \leqq 0.9$, $0 \leqq d \leqq 1.2$, $0 \leqq e \leqq 0.03$, $10^{-6} \leqq f \leqq 0.03$ and $c+d+e \neq 0$.

2. A rare earth element activated complex halide phosphor as defined in Claim 1, wherein said b is zero.

3. A rare earth element activated complex halide phosphor as defined in Claim 2, wherein said c, d and e are $c \neq 0$, $d=0$ and $e=0$.

4. A rare earth element activated complex halide phosphor as defined in Claim 3, wherein said a, c and f are $0.95 \leqq a \leqq 1.02$, $0.01 \leqq c \leqq 0.5$ and $10^{-4} \leqq f \leqq 0.01$.

5. A rare earth element activated complex halide phosphor as defined in Claim 2, wherein said c, d and e are $c=0$, $d \neq 0$ and $e=0$.

6. A rare earth element activated complex halide phosphor as defined in Claim 5, wherein said a, d and f are $0.95 \leqq a \leqq 1.02$, $0.01 \leqq d \leqq 0.2$ and $10^{-4} \leqq f \leqq 0.01$.

7. A rare earth element activated complex halide phosphor as defined in Claim 2, wherein said c, d and e are c=0, d=0, and e≠0.

8. A rare earth element activated complex halide phosphor as defined in Claim 7, wherein said a, e and f are $0.95 \leqq a \leqq 1.02$, $0.0005 \leqq e \leqq 0.01$ and $10^{-4} \leqq f \leqq 0.01$.

9. A rare earth element activated complex halide phosphor as defined in Claim 2, wherein said c, d and e are c≠0, d≠0 and e=0.

10. A rare earth element activated complex halide phosphor as defined in Claim 9, wherein said a, c, d and f are $0.95 \leqq a \leqq 1.02$, $0.01 \leqq c \leqq 0.5$, $0.01 \leqq d \leqq 0.2$ and $10^{-4} \leqq f \leqq 0.01$.

11. A rare earth element activated complex halide phosphor as defined in Claim 2, wherein said c, d and e are c≠0, d=0 and e≠0.

12. A rare earth element activated complex halide phosphor as defined in Claim 11, wherein said a, c, e and f are $0.95 \leqq a \leqq 1.02$, $0.01 \leqq c \leqq 0.5$, $0.0005 \leqq e \leqq 0.01$ and $10^{-4} \leqq f \leqq 0.01$.

13. A rare earth element activated complex halide phosphor as defined in Claim 2, wherein said c, d and e are c=0, d≠0 and e≠0.

14. A rare earth element activated complex halide phosphor as defined in Claim 13, wherein said a, d, e and f are $0.95 \leqq a \leqq 1.02$, $0.01 \leqq d \leqq 0.2$, $0.0005 \leqq e \leqq 0.01$ and $10^{-4} \leqq f \leqq 0.01$.

15. A rare earth element activated complex halide phosphor as defined in Claim 2, wherein said c, d and e are c≠0, d≠0 and e≠0.

16. A rare earth element activated complex halide phosphor as defined in Claim 15, wherein said a, c, d, e and f are $0.95 \leqq a \leqq 1.02$, $0.01 \leqq c \leqq 0.5$, $0.01 \leqq d \leqq 0.2$, $0.0005 \leqq e \leqq 0.01$ and $10^{-4} \leqq f \leqq 0.01$.

17. A rare earth element activated complex halide phosphor as defined in Claim 1, wherein said b is not zero.

18. A rare earth element activated complex halide phosphor as defined in Claim 17, wherein said c, d and e are c≠0, d=0 and e=0.

19. A rare earth element activated complex halide phosphor as defined in Claim 18, wherein said a, b, c and f are $0.95 \leqq a \leqq 1.02$, $0.005 \leqq b \leqq 0.2$, $0.01 \leqq c \leqq 0.2$ and $10^{-4} \leqq f \leqq 0.01$.

20. A rare earth element activated complex halide phosphor as defined in Claim 17, wherein said c, d and e are c=0, d≠0 and e=0.

21. A rare earth element activated complex halide phosphor as defined in Claim 20, wherein said a, b, d and f are $0.95 \leqq a \leqq 1.02$, $0.005 \leqq b \leqq 0.2$, $0.001 \leqq d \leqq 0.1$ and $10^{-4} \leqq f \leqq 0.01$.

22. A rare earth element activated complex halide phosphor as defined in Claim 17, wherein said c, d and e are c=0, d=0 and e≠0.

23. A rare earth element activated complex halide phosphor as defined in Claim 22, wherein said a, b, e and f are $0.95 \leqq a \leqq 1.02$, $0.005 \leqq b \leqq 0.2$, $0.0005 \leqq e \leqq 0.01$ and $10^{-4} \leqq f \leqq 0.01$.

24. A rare earth element activated complex halide phosphor as defined in Claim 17, wherein said c, d and e are c≠0, d≠0 and e=0.

25. A rare earth element activated complex halide phosphor as defined in Claim 24, wherein said a, b, c, d and f are $0.95 \leqq a \leqq 1.02$, $0.005 \leqq b \leqq 0.2$, $0.01 \leqq c \leqq 0.2$, $0.001 \leqq d \leqq 0.1$ and $10^{-4} \leqq f \leqq 0.01$.

26. A rare earth element activated complex halide phosphor as defined in Claim 17, wherein said c, d and e are c≠0, d=0 and e≠0.

27. A rare earth element activated complex halide phosphor as defined in Claim 26, wherein said a, b, c, e and f are $0.95 \leqq a \leqq 1.02$, $0.005 \leqq b \leqq 0.2$, $0.01 \leqq c \leqq 0.2$, $0.0005 \leqq e \leqq 0.01$ and $10^{-4} \leqq f \leqq 0.01$.

28. A rare earth element activated complex halide phosphor as defined in Claim 17, wherein said c, d and e are c=0, d≠0 and e≠0.

29. A rare earth element activated complex halide phosphor as defined in Claim 28, wherein said a, b, d, e and f are $0.95 \leqq a \leqq 1.02$, $0.005 \leqq b \leqq 0.2$, $0.001 \leqq d \leqq 0.1$, $0.0005 \leqq e \leqq 0.01$ and $10^{-4} \leqq f \leqq 0.01$.

30. A rare earth element activated complex halide phosphor as defined in Claim 17, wherein said c, d and e are c≠0, d≠0 and e≠0.

31. A rare earth element activated complex halide phosphor as defined in Claim 30, wherein said a, b, c, d, e and f are $0.95 \leqq a \leqq 1.02$, $0.005 \leqq b \leqq 0.2$, $0.01 \leqq c \leqq 0.2$, $0.001 \leqq d \leqq 0.1$, $0.0005 \leqq e \leqq 0.01$ and $10^{-4} \leqq f \leqq 0.01$.

**Revendications**

1. Substance luminescente à base d'halogénure complexe activé par un élément des terres rares, caractérisée en ce qu'elle répond à la formule:

$$BaF_2 \cdot aBaX_2 \cdot bMgF_2 \cdot cMe^IF \cdot dMe^{II}F_2 \cdot eMe^{III}F_3:fLn$$

dans laquelle X est le chlore, le brome et/ou l'iode, $Me^I$ est le lithium et/ou le sodium, $Me^{II}$ est le béryllium, le calcium et/ou le strontium, $Me^{III}$ est l'aluminium, le gallium, l'yttrium et/ou le lanthane, Ln est l'europium, le cérium et/ou le terbium, et a, b, c, d, e et f sont des nombres tels qu'ils satisfont aux conditions: $0.90 \leqslant a \leqslant 1.05$, $0 \leqslant b \leqslant 1.2$, $0 \leqslant c \leqslant 0.9$, $0 \leqslant d \leqslant 1.2$, $0 \leqslant e \leqslant 0.03$, $10^{-6} \leqslant f \leqslant 0.03$, et c+d+e≠0.

2. Substance luminescente à base d'halogénure complexe activé par un élément des terres rares selon la revendication 1, caractérisée ence que b est égal à zéro.

3. Substance luminescente à base d'halogénère complexe activé par un élément des terres rares selon la revendication 2, caractérisée ence que c, d, et e sont $c \neq 0$, $d=0$ et $e=0$.

4. Substance luminescente à base d'halogénure complexe activé par un élément des terres rares selon la revendication 2, caractérisée en ce que a, c et f sont tels que $0.95 \leqslant a \leqslant 1,02$, $0,01 \leqslant c \leqslant 0,5$, et $10^{-4} \leqslant f \leqslant 0,01$.

5. Substance luminescente à base d'halogénure complexe activé par un élément des terres rares selon la revendication 2, caractérisée en ce que c, d et e sont tels que $c=0$, $d \neq 0$ et $e=0$.

6. Substance luminescente à base d'halogénure complexe activé par un élément des terres rares selon la revendication 5, caractérisée en ce que a, d et f sont tels que $0,95 \leqslant a \leqslant 1,02$, $0,01 \leqslant d \leqslant 0,2$ et $10^{-4} \leqslant f \leqslant 0,01$.

7. Substance luminescente à base d'halogénure complexe activé par un élément des terres rares selon la revendication 2, caractérisée en ce que c, d et e sont tels que $c=0$, $d=0$ et $e \neq 0$.

8. Substance luminescente à base d'halogénure complexe activé par un élément des terres rares selon la revendication 7, caractérisée en ce que a, e et f sont tels que $0,95 \leqslant a \leqslant 1,02$, $0,0005 \leqslant e \leqslant 0,01$ et $10^{-4} \leqslant f \leqslant 0,01$.

9. Substance luminescente à base d'halogénure complexe activé par un élément des terres rares selon la revendication 2, caractérisée en ce que c, d et e sont tels que $c \neq 0$, $d \neq 0$ et $e=0$.

10. Substance luminescente à base d'halogénure complexe activé par un élément des terres rares selon la revendication 8, caractérisée en ce que a, c, d et f sont tels que $0,95 \leqslant a \leqslant 1,02$, $0,01 \leqslant c \leqslant 0,5 \leqslant 0,01 \leqslant d \leqslant 0,2$ et $10^{-4} \leqslant f \leqslant 0,01$.

11. Substance luminescente à base d'halogénure complexe activé par un élément des terres rares selon la revendication 2, caractérisée en ce que c, d et e sont tels que $c \neq 0$, $d=0$ et $e \neq 0$.

12. Substance luminescente à base d'halogénure complexe activé par un élément des terres rares selon la revendication 11, caractérisée en ce que a, c, e et f sont tels que $0,95 \leqslant a \leqslant 1,02$, $0,01 \leqslant c \leqslant 0,5$, $0,0005 \leqslant e \leqslant 0,01$ et $10^{-4} \leqslant f \leqslant 0,01$.

13. Substance luminescente à base d'halogénure complexe activé par un élément des terres rares selon la revendication 2, caractérisée en ce que c, d et e sont tels que $c=0$, $d \neq 0$ et $e \neq 0$.

14. Substance luminescente à base d'halogénure complexe activé par un élément des terres rares selon la revendication 13, caractérisée en ce que a, d, e et f sont tels que $0,95 \leqslant a \leqslant 1,02$, $0,01 \leqslant d \leqslant 0,2$, $0,0005 \leqslant e \leqslant 0,01$ et $10^{-4} \leqslant f \leqslant 0,01$.

15. Substance luminescente à base d'halogénure complexe activé par un élément des terres rares selon la revendication 2, caractérisée en ce que c, d et e sont tels que $c \neq 0$, $d \neq 0$ et $e \neq 0$.

16. Substance luminescente à base d'halogénure complexe activé par un élément des terres rares selon la revendication 15, caractérisée en ce que a, c, d, e et f sont tels que $0,95 \leqslant a \leqslant 1,02$, $0,01 \leqslant c \leqslant 0,5$, $0,01 \leqslant d \leqslant 0,2$, $0,0005 \leqslant e \leqslant 0,01$ et $10^{-4} \leqslant f \leqslant 0,01$.

17. Substance luminescente à base d'halogénure complexe activé par un élément des terres rares selon la revendication 1, caractérisée en ce que b est différent de 0.

18. Substance luminescente à base d'halogénure complexe activé par un élément des terres rares selon la revendication 17, caractérisée en ce que c, d et e sont tels que $c \neq 0$, $d=0$ et $e=0$.

19. Substance luminescente à base d'halogénure complexe activé par un élément des terres rares selon la revendication 18, caractérisée en ce que a, b, c et f sont tels que $0,95 \leqslant a \leqslant 1,02$, $0,005 \leqslant b \leqslant 0,2$, $0,01 \leqslant c \leqslant 0,2$, et $10^{-4} \leqslant f \leqslant 0,01$.

20. Substance luminescente à base d'halogénure complexe activé par un élément des terres rares selon la revendication 17, caractérisée en ce que c, d et e sont tels que $c=0$, $d \neq 0$ et $e=0$.

21. Substance luminescente à base d'halogénure complexe activé par un élément des terres rares selon la revendication 20, caractérisée en ce que a, b, d et f sont tels que $0,95 \leqslant a \leqslant 1,02$, $0,005 \leqslant b \leqslant 0,2$, $0,001 \leqslant d \leqslant 0,1$ et $10^{-4} \leqslant f \leqslant 0,01$.

22. Substance luminescente à base d'halogénure complexe activé par un élément des terres rares selon la revendication 17, caractérisée en ce que c, d et e sont tels que $c=0$, $d=0$ et $e \neq 0$.

23. Substance luminescente à base d'halogénure complexe activé par un élément des terres rares selon la revendication 22, caractérisée en ce que a, b, e et f sont tels que $0,95 \leqslant a \leqslant 1,02$, $0,005 \leqslant b \leqslant 0,2$, $0,0005 \leqslant e \leqslant 0,01$ et $10^{-4} \leqslant f \leqslant 0,01$.

24. Substance luminescente à base d'halogénure complexe activé par un élément des terres rares selon la revendication 17, caractérisée en ce que c, d et e sont tels que $c \neq 0$, $d \neq 0$ et $e=0$.

25. Substance luminescente à base d'halogénure complexe activé par un élément des terres rares selon la revendication 24, caractérisée en ce que a, b, c, d et f sont tels que $0,95 \leqslant a \leqslant 1,02$, $0,005 \leqslant b \leqslant 0,2$, $0,01 \leqslant c \leqslant 0,2$, $0,001 \leqslant d \leqslant 0,1$ et $10^{-4} \leqslant f \leqslant 0,01$.

26. Substance luminescente à base d'halogénure complexe activé par un élément des terres rares selon la revendication 17, caractérisée en ce que c, d et e sont tels que $c \neq 0$, $d=0$ et $e \neq 0$.

27. Substance luminescente à base d'halogénure complexe activé par un élément des terres rares selon la revendication 26, caractérisée en ce que a, b, c, e et f sont tels que $0,95 \leqslant a \leqslant 1,02$, $0,005 \leqslant b \leqslant 0,2$, $0,01 \leqslant c \leqslant 0,2$, $0,0005 \leqslant e \leqslant 0,01$ et $10^{-4} \leqslant f \leqslant 0,01$.

28. Substance luminescente à base d'halogénure complexe activé par un élément des terres rares selon la revendication 17, caractérisée en ce que c, d et e sont tels que $c=0$, $d \neq 0$ et $e \neq 0$.

29. Substance luminescente à base d'halogénure complexe activé par un élément des terres rares selon la revendication 28, caractérisée en ce que a, b, d, e et f sont tels que $0,95 \leqslant a \leqslant 1,02$, $0,005 \leqslant b \leqslant 0,2$, $0,001 \leqslant d \leqslant 0,1$, $0,0005 \leqslant e \leqslant 0,01$ et $10^{-4} \leqslant f \leqslant 0,01$.

30. Substance luminescente à base d'halogénure complexe activé par un élément des terres rares selon la revendication 17, caractérisée en ce que c, d et e sont tels que $c \neq 0$, $d \neq 0$ et $e \neq 0$.

31. Substance luminescente à base d'halogénure complexe activé par un élément des terres rares selon la revendication 30, caractérisée en ce que a, b, c, d, e et f sont tels que $0,95 \leqslant a \leqslant 1,02$, $0,005 \leqslant b \leqslant 0,2$, $0,01 \leqslant c \leqslant 0,2$, $0,001 \leqslant d \leqslant 0,1$, $0,0005 \leqslant e \leqslant 0,01$ et $10^{-4} \leqslant f \leqslant 0,01$.

**Patentansprüche**

1. Ein mit einem Element der seltenen Erden aktivierter, aus einem komplexen Halogenid bestehender Leuchtphosphor der Formel

$$BaF_2 \cdot aBaX_2 \cdot bMgF_2 \cdot cMe^IF \cdot dMe^{II}F_2 \cdot eMe^{III}F_3 \text{:} fLn,$$

in der X Chlor, Brom und/oder Jod, $Me^I$ Lithium und/oder Natrium, $M^{II}$ Beryllium, Kalzium und/oder Strontium, $Me^{III}$ Aluminium, Gallium, Yttrium und/oder Lanthan, Ln Europium, Cer und/oder Terbium und a, b, c, d, e und f Zahlen bedeuten, die den folgenden Bedingungen genügen: $0,90 \leqq a \leqq 1,05$, $0 \leqq b \leqq 1,2$, $0 \leqq c \leqq 0,9$, $0 \leqq d \leqq 1,2$, $0 \leqq e \leqq 0,03$, $10^{-6} \leqq f \leqq 0,03$ und $c+d+e \neq 0$.

2. Ein mit einem Element der seltenen Erden aktivierter, aus einem komplexen Halogenid bestehender Leuchtphosphor nach Anspruch 1, in dem b null ist.

3. Ein mit einem Element der seltenen Erden aktivierter, aus einem komplexen Halogenid bestehender Leuchtphosphor nach Anspruch 2, in dem c, d und e die folgenden Bedeutungen haben: $c \neq 0$, $d=0$ und $e=0$.

4. Ein mit einem Element der seltenen Erden aktivierter, aus einem komplexen Halogenid bestehender Leuchtphosphor nach Anspruch 3, in dem a, c und f die folgenden Bedeutungen besitzen: $0,95 \leqq a \leqq 1,02$, $0,01 \leqq c \leqq 0,5$ und $10^{-4} \leqq f \leqq 0,01$.

5. Ein mit einem Element der seltenen Erden aktivierter, aus einem komplexen Halogenid bestehender Leuchtphosphor nach Anspruch 2, worin c, d und e die folgenden Bedeutungen besitzen: $c=0$, $d \neq 0$ und $e=0$.

6. Ein mit einem Element der seltenen Erden aktivierter, aus einem komplexen Halogenid bestehender Leuchtphosphor nach Anspruch 5, in dem a, d und f die folgenden Bedeutungen besitzen: $0,95 \leqq a \leqq 1,02$, $0,01 \leqq d \leqq 0,2$ und $10^{-4} \leqq f \leqq 0,01$.

7. Ein mit einem Element der seltenen Erden aktivierter, aus einem komplexen Halogenid bestehender Leuchtphosphor nach Anspruch 2, worin c, d und e die folgenden Bedeutungen besitzen: $c=0$, $d=0$ und $e \neq 0$.

8. Ein mit einem Element der seltenen Erden aktivierter, aus einem komplexen Halogenid bestehender Leuchtphosphor nach Anspruch 7, worin a, e und f die folgenden Bedeutungen besitzen: $0,95 \leqq a \leqq 1,02$, $0,0005 \leqq e \leqq 0,01$ und $10^{-4} \leqq f \leqq 0,01$.

9. Ein mit einem Element der seltenen Erden aktivierter, aus einem komplexen Halogenid bestehender Leuchtphosphor nach Anspruch 2, worin c, d und e die folgenden Bedeutungen besitzen: $c \neq 0$, $d \neq 0$ und $e=0$.

10. Ein mit einem Element der seltenen Erden aktivierter, aus einem komplexen Halogenid bestehender Leuchtphosphor nach Anspruch 9, worin a, c, d und f die folgenden Bedeutungen besitzen: $0,95 \leqq a \leqq 1,02$, $0,01 \leqq c \leqq 0,5$, $0,01 \leqq d \leqq 0,2$ und $10^{-4} \leqq f \leqq 0,01$.

11. Ein mit einem Element der seltenen Erden aktivierter, aus einem komplexen Halogenid bestehender Leuchtphosphor nach Anspruch 2, worin c, d und e die folgenden Bedeutungen besitzen: $c \neq 0$, $d=0$ und $e \neq 0$.

12. Ein mit einem Element der seltenen Erden aktivierter, aus einem komplexen Halogenid bestehender Leuchtphosphor nach Anspruch 11, worin a, c, e und f die folgenden Bedeutungen besitzen: $0,95 \leqq a \leqq 1,02$, $0,01 \leqq c \leqq 0,5$, $0,0005 \leqq e \leqq 0,01$ und $10^{-4} \leqq f \leqq 0,01$.

13. Ein mit einem Element der seltenen Erden aktivierter, aus einem komplexen Halogenid bestehender Leuchtphosphor nach Anspruch 2, worin c, d und e die folgenden Bedeutungen besitzen: $c=0$, $d \neq 0$ und $e \neq 0$.

14. Ein mit einem Element der seltenen Erden aktivierter, aus einem komplexen Halogenid bestehender Leuchtphosphor nach Anspruch 13, worin a, d, e und f die folgenden Bedeutungen besitzen: $0,95 \leqq a \leqq 1,02$, $0,01 \leqq d \leqq 0,2$, $0,0005 \leqq e \leqq 0,01$ und $10^{-4} \leqq f \leqq 0,01$.

15. Ein mit einem Element der seltenen Erden aktivierter, aus einem komplexen Halogenid bestehender Leuchtphosphor nach Anspruch 2, worin c, d und e die folgenden Bedeutungen besitzen: $c \neq 0$, $d \neq 0$ und $e \neq 0$.

16. Ein mit einem Element der seltenen Erden aktivierter, aus einem komplexen Halogenid bestehender Leuchtphosphor nach Anspruch 15, worin a, c, d, e und f die folgenden Bedeutungen besitzen: $0,95 \leqq a \leqq 1,02$, $0,01 \leqq c \leqq 0,5$, $0,01 \leqq d \leqq 0,02$, $0,0005 \leqq e \leqq 0,01$ und $10^{-4} \leqq f \leqq 0,01$.

17. Ein mit einem Element der seltenen Erden aktivierter, aus einem komplexen Halogenid bestehender Leuchtphosphor nach Anspruch 1, worin b nicht null ist.

18. Ein mit einem Element der seltenen Erden aktivierter, aus einem komplexen Halogenid bestehender Leuchtphosphor nach Anspruch 17, worin c, d und e die folgenden Bedeutungen besitzen: $c \neq 0$, $d = 0$ und $e = 0$.

19. Ein mit einem Element der seltenen Erden aktivierter, aus einem komplexen Halogenid bestehender Leuchtphosphor nach Anspruch 18, worin a, b, c und f die folgenden Bedeutungen besitzen: $0{,}95 \leq a \leq 1{,}02$, $0{,}005 \leq b \leq 0{,}2$, $0{,}01 \leq c \leq 0{,}2$ und $10^{-4} \leq f \leq 0{,}01$.

20. Ein mit einem Element der seltenen Erden aktivierter, aus einem komplexen Halogenid bestehender Leuchtphosphor nach Anspruch 17, worin c, d und e die folgenden Bedeutungen besitzen: $c = 0$, $d \neq 0$ und $e = 0$.

21. Ein mit einem Element der seltenen Erden aktivierter, aus einem komplexen Halogenid bestehender Leuchtphosphor nach Anspruch 20, worin a, b, d und f die folgenden Bedeutungen besitzen: $0{,}95 \leq a \leq 1{,}02$, $0{,}005 \leq b \leq 0{,}2$, $0{,}001 \leq d \leq 0{,}1$ und $10^{-4} \leq f \leq 0{,}01$.

22. Ein mit einem Element der seltenen Erden aktivierter, aus einem komplexen Halogenid bestehender Leuchtphosphor nach Anspruch 17, worin c, d und e die folgenden Bedeutungen besitzen: $c = 0$, $d = 0$ und $e \neq 0$.

23. Ein mit einem Element der seltenen Erden aktivierter, aus einem komplexen Halogenid bestehender Leuchtphosphor nach Anspruch 22, worin a, b, e und f die folgenden Bedeutungen besitzen: $0{,}95 \leq a \leq 1{,}02$, $0{,}005 \leq b \leq 0{,}2$, $0{,}0005 \leq e \leq 0{,}01$ und $10^{-4} \leq f \leq 0{,}01$.

24. Ein mit einem Element der seltenen Erden aktivierter, aus einem komplexen Halogenid bestehender Leuchtphosphor nach Anspruch 17, worin c, d und e die folgenden Bedeutungen besitzen: $c \neq 0$, $d \neq 0$ und $e = 0$.

25. Ein mit einem Element der seltenen Erden aktivierter, aus einem komplexen Halogenid bestehender Leuchtphosphor nach Anspruch 24, worin a, b, c, d und f die folgenden Bedeutungen besitzen: $0{,}95 \leq a \leq 1{,}02$, $0{,}005 \leq b \leq 0{,}2$, $0{,}01 \leq c \leq 0{,}2$, $0{,}001 \leq d \leq 0{,}1$ und $10^{-4} \leq f \leq 0{,}01$.

26. Ein mit einem Element der seltenen Erden aktivierter, aus einem komplexen Halogenid bestehender Leuchtphosphor nach Anspruch 17, worin c, d und e die folgenden Bedeutungen besitzen: $c \neq 0$, $d = 0$ und $e \neq 0$.

27. Ein mit einem Element der seltenen Erden aktivierter, aus einem komplexen Halogenid bestehender Leuchtphosphor nach Anspruch 26, worin a, b, c, e und f die folgenden Bedeutungen besitzen: $0{,}95 \leq a \leq 1{,}02$, $0{,}005 \leq b \leq 0{,}2$, $0{,}01 \leq c \leq 0{,}2$, $0{,}0005 \leq e \leq 0{,}01$ und $10^{-4} \leq f \leq 0{,}01$.

28. Ein mit einem Element der seltenen Erden aktivierter, aus einem komplexen Halogenid bestehender Leuchtphosphor nach Anspruch 17, worin c, d und e die folgenden Bedeutungen besitzen: $c = 0$, $d \neq 0$ und $e \neq 0$.

29. Ein mit einem Element der seltenen Erden aktivierter, aus einem komplexen Halogenid bestehender Leuchtphosphor nach Anspruch 28, worin a, b, d, e und f die folgenden Bedeutungen besitzen: $0.95 \leq a \leq 1{,}02$, $0{,}005 \leq b \leq 0{,}2$, $0{,}001 \leq d \leq 0{,}1$, $0{,}0005 \leq e \leq 0{,}01$ und $10^{-4} \leq f \leq 0{,}01$.

30. Ein mit einem Element der seltenen Erden aktivierter, aus einem komplexen Halogenid bestehender Leuchtphosphor nach Anspruch 17, worin c, d und e die folgenden Bedeutungen besitzen: $c \neq 0$, $d \neq 0$ und $e \neq 0$.

31. Ein mit einem Element der seltenen Erden aktivierter, aus einem komplexen Halogenid bestehender Leuchtphosphor nach Anspruch 30, worin a, b, c, d, e und f die folgenden Bedeutungen besitzen: $0{,}95 \leq a \leq 1{,}02$, $0{,}005 \leq b \leq 0{,}2$, $0{,}01 \leq c \leq 0{,}2$, $0{,}001 \leq d \leq 0{,}1$, $0{,}0005 \leq e \leq 0{,}01$ und $10^{-4} \leq f \leq 0{,}01$.

14

F I G . 1

0021 342

F I G.2

F I G.3

0021342

# F I G .4

RELATIVE LUMINANCE OF EMISSION

0 021 342

VALUE c

# F I G.5

VALUE d

# F I G . 6

RELATIVE LUMINANCE OF EMISSION

0021 342

VALUE e